(19) Europäisches Patentamt
European Patent Office
Office européen des brevets

(11) EP 4 803 795 A1

(12) # EUROPEAN PATENT APPLICATION
published in accordance with Art. 153(4) EPC

(43) Date of publication:
**09.09.2026 Bulletin 2026/37**

(21) Application number: **24885222.0**

(22) Date of filing: **24.06.2024**

(51) International Patent Classification (IPC):
***F16L 47/06*** *(2006.01)* ***F16J 15/10*** *(2006.01)*
***F16L 21/035*** *(2006.01)*

(52) Cooperative Patent Classification (CPC):
**F16J 15/10; F16L 21/035; F16L 47/06**

(86) International application number:
**PCT/JP2024/022826**

(87) International publication number:
**WO 2025/094445 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.10.2023 JP 2023186488**

(71) Applicant: **The Yokohama Rubber Co., Ltd.**
**Hiratsuka-shi, Kanagawa 254-8601 (JP)**

(72) Inventors:
- **HOU, Gang**
  **Hiratsuka-shi, Kanagawa 254-8601 (JP)**
- **KURIBAYASHI, Nobuaki**
  **Hiratsuka-shi, Kanagawa 254-8601 (JP)**

(74) Representative: **Grünecker Patent- und Rechtsanwälte**
**PartG mbB**
**Leopoldstraße 4**
**80802 München (DE)**

(54) **RESIN PIPE EQUIPPED WITH SEAL MATERIAL**

(57) Provided is a resin pipe with sealant capable of stably ensuring good sealing properties over a long term. Of a plurality of annular grooves (6a, 6b) formed at intervals in the pipe axial direction on an outer circumferential surface of a connection end portion (5) of a resin pipe (2), a projection amount (P1), from the outer circumferential surface of the connection end portion (5) in the pipe radial direction, of an annular sealant (8a) disposed in a frontmost annular groove (6a) positioned closest to the pipe end of the connection end portion (5) is set smaller than a projection amount (P2) in the pipe radial direction of the other annular sealant (8b) disposed in the other annular groove (6b). The connection end portion (5) is inserted into a connection hole (11a) formed in a connection object (11) to connect and fix the resin pipe (1) to the connection object (11). An inner circumferential surface of the connection hole (11a) presses the other sealant (8b) more strongly than the one sealant (8a) to seal a space (S) between the outer circumferential surface of the connection end portion (5) and the inner circumferential surface of the connection hole (11a).

5
8a
S
P1
P2
8b
W1
W2
D1
D2
6a
11a
6b
B1
B2
4
3

FIG. 3

EP 4 803 795 A1

## Description

Technical Field

The present invention relates to a resin pipe in which a sealant is disposed at a connection end portion, and more particularly, to a resin pipe with sealant which can stably ensure good sealing properties over a long term.

Background Art

Resin pipes, which are lighter than metal pipes, have been used for various applications. The connection end portion of the resin pipe is inserted in and connected to a connection hole of a connection object. A sealant such as an O-ring is placed on the outer circumferential surface of the connection end portion, and this sealant ensures the sealing properties between the connection end portion and the connection hole (e.g., see Patent Document 1). The connection end portion inserted into the connection hole is pressed together with the sealant.

The connection end portion made of resin has lower rigidity than the connection end portion made of metal, and thus is easily deformed by the pressing force. If the connection end portion is deformed or damaged more than expected, a space between the connection end portion and the connection hole cannot be sufficiently sealed. Patent Document 1 discloses that two O-rings are disposed at the connection end portion with a space therebetween in the axial direction. However, simply increasing the number of O-rings may not ensure good sealing properties over a long term. Thus, there is room for improvement in order to stably ensure good sealing properties over a long term.

Citation List

Patent Literature

Patent Document 1: JP 2010-249166 A

Summary of Invention

Technical Problem

An object of the present invention is to provide a resin pipe with sealant that can stably ensure good sealing properties over a long term.

Solution to Problem

To achieve the object described above, a resin pipe with sealant according to an embodiment of the present invention includes: a resin pipe including a connection end portion to be inserted into a connection hole formed in a connection object; and sealants having an annular shape respectively disposed in a plurality of annular grooves formed at intervals in the pipe axial direction on an outer circumferential surface of the connection end portion of the resin pipe. Of the plurality of annular grooves, a projection amount, from the outer circumferential surface of the connection end portion in a pipe radial direction, of a sealant of the sealants disposed in a frontmost annular groove positioned closest to the pipe end of the connection end portion is set smaller than the projection amounts, from the outer circumferential surface of the connection end portion in the pipe radial direction, of the other sealants disposed in the other annular grooves positioned farther from the pipe end side than the frontmost annular groove.

Advantageous Effects of Invention

In an embodiment of the present invention, the projection amount, from the outer circumferential surface of the connection end portion in the pipe radial direction, of the sealant disposed in the frontmost annular groove is set smaller than the projection amounts of the other sealants, so that the connection end portion is more easily inserted into the connection hole than when the projection amounts of the sealants from the outer circumferential surface of the connection end portion are the same. Damage to the sealant disposed in the frontmost annular groove is advantageously prevented during insertion of the connection end portion into the connection hole. The sealant disposed in the frontmost annular groove is less likely to be excessively compressed, so that the load over time is reduced and the sealing properties are easily ensured over a long term. Deformation in the vicinity of the frontmost annular groove of the resin pipe is also advantageously suppressed, thereby ensuring the sealing properties over a long term. Various external forces are borne more by the other sealants, thereby allowing to stably ensure good sealing properties over a long term by the sealants.

Brief Description of Drawings

FIG. 1 is an explanatory diagram illustrating the vicinity of the connection end portion of the resin pipe with sealant according to an embodiment of the present invention in a longitudinal cross-sectional view.
FIG. 2 is a view in the direction of arrow A of FIG. 1.
FIG. 3 is an enlarged view of the annular groove and the sealant of FIG. 1.
FIG. 4 is an explanatory diagram illustrating a state in which the connection end portion illustrated in FIG. 1 is inserted into the connection hole and the resin pipe is connected and fixed to the connection object in a longitudinal cross-sectional view.
FIG. 5 is an enlarged view of the annular groove and the sealant illustrated of FIG. 4.
FIG. 6 is an explanatory diagram illustrating the vicinity of the connection end portion of another embodiment of the resin pipe with sealant in a longitudinal cross-sectional view.
FIG. 7 is an explanatory diagram illustrating the vicinity of the connection end portion of still another embodiment of the resin pipe with sealant in a longitudinal cross-sectional view.

Description of Embodiments

Hereinafter, the resin pipe with sealant according to an embodiment of the present invention will be described based on the embodiment illustrated in the drawings.

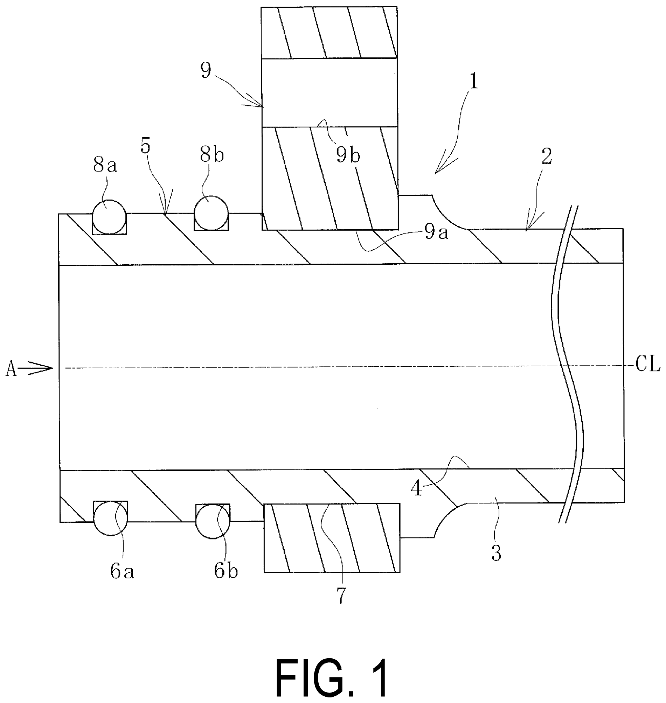

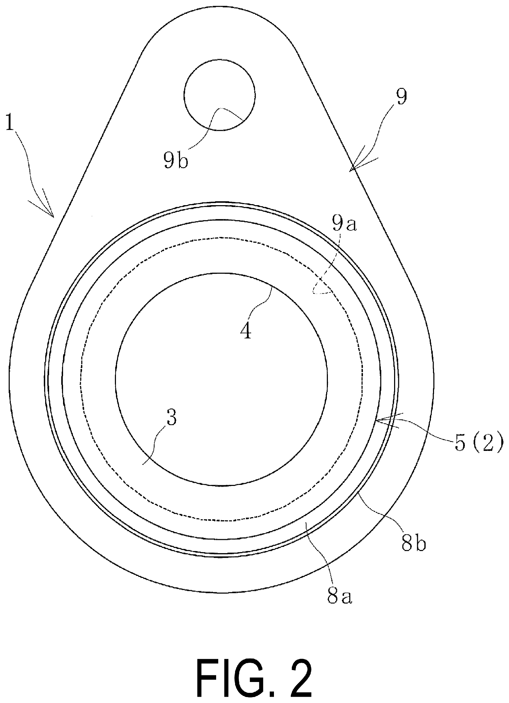

The embodiment of the resin pipe with sealant 1 illustrated in FIGS. 1 to 3 includes a resin pipe 2 and a plurality of annular sealants 8 (8a, 8b). As the sealant 8, various known sealants can be used, such as an O-ring formed of an elastic material such as various rubbers including silicone rubber or an elastomer. In this embodiment, sealants 8a and 8b have the same specification, and each has a simple circular cross-section.

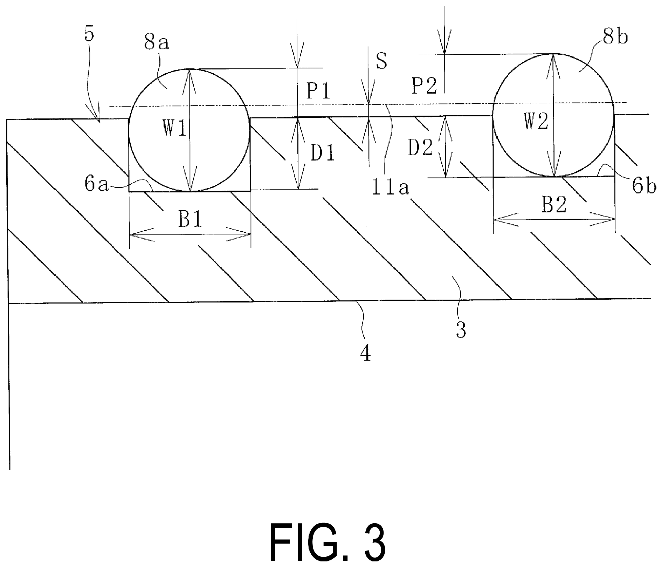

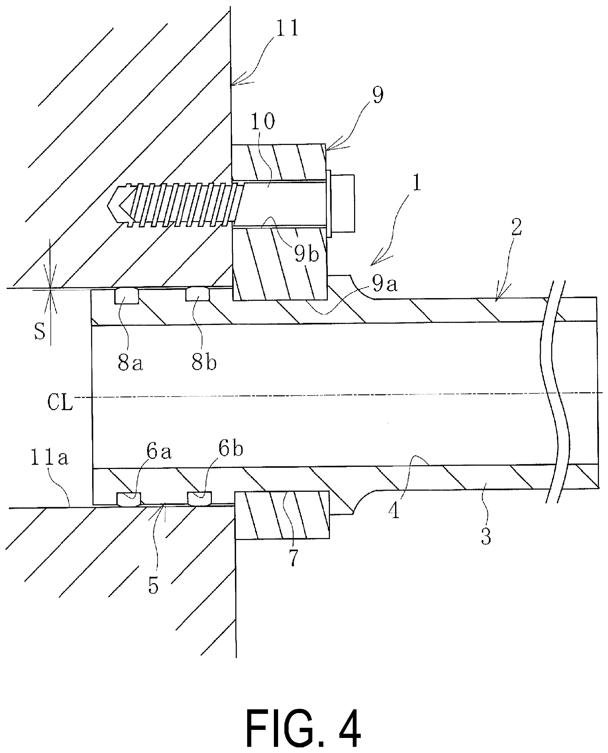

This resin pipe with sealant 1 is used in various apparatuses, and for example, is used as a pipe for an air conditioner installed in a vehicle such as an automobile. The resin pipe 2 may be not only a straight pipe but also a bent pipe depending on the application (place of use). Although details are described below, as illustrated in FIG. 4, the resin pipe 2 is connected to a connection object 11 (such as a joint part or various apparatuses) by inserting a connection end portion 5 into a connection hole (flow path) 11a formed in the connection object 11. In FIG. 3, the inner circumferential surface of the connection hole 11a when the connection end portion 5 is inserted into a connection hole 11a is illustrated by a dot-dash line. There is a space S between the outer circumferential surface of the connection end portion 5 and the inner circumferential surface of the connection hole 11a.

The resin pipe 2 is a cylindrical body having a pipe wall 3 formed of resin, and a pipe passage 4 extends in the pipe axial direction. Fluid flows through the pipe passage 4 and the connection hole 11a. The front-end portion of the resin pipe 2 in the pipe axial direction is the connection end portion 5. The dot-dash line CL in the diagram illustrates the axial center of the resin pipe 2 passing through the center of the cross-section of the pipe passage 4. The extension direction of the axial center CL is the pipe axial direction. The inner diameter of the resin pipe 2 (diameter of the pipe passage 4) is, for example, 4 mm or more and 20 mm or less, and is set to a substantially constant value over the entire length of the pipe.

The resin pipe 2 is molded by various known methods such as injection molding in which a molten resin is injected into a cavity formed in a molding mold. The resin forming the resin pipe 2 is selected from various injectable known thermoplastic resins in accordance with the performance, or the like, required for the resin pipe 2. For example, polyamide, polypropylene, ABS resin, or the like, are used for the resin pipe 2 for air conditioners installed in automobiles. Among them, the following are suitable: nylon resins (6-nylon, 66-nylon, 12-nylon, and 11-nylon); polyethylene; polycarbonate; polystyrene; polyoxymethylene; polymethyl methacrylate; polybutylene terephthalate; acrylic; polyetheretherketone; thermoplastic polyurethane; polyethylene terephthalate; and polyvinyl chloride.

The resin pipe 2 may be formed of only a thermoplastic resin, but may have a specification that various fibers (e.g., the material can be short or long fibers such as glass fiber or carbon fiber) are mixed as reinforcing fibers f at a predetermined ratio (e.g., 30% parts by mass or more and 40% parts by mass or less per 100 parts by mass of the resin). When the reinforcing fiber f is a short fiber, its size is, for example, 0.001 mm or more and 1.0 mm or less in outer diameter and 0.01 mm or more and 10 mm or less in length.

A plurality of annular grooves 6 (6a, 6b) are formed on the outer circumferential surface of the connection end portion 5 at intervals in the pipe axial direction. One annular groove 6a is a frontmost annular groove disposed closest to the pipe end of the connection end portion 5. The other annular groove 6b is an annular groove disposed farther from the pipe end side than the frontmost annular groove 6a. The sealants 8a, 8b are respectively externally fitted to the annular grooves 6a, 6b. In the resin pipe 2 of this embodiment, the outer diameter of the connection end portion 5 is larger than the outer diameter of the portion other than the connection end portion 5 (non-connection end portion). The outer diameter of the connection end portion 5 may be the same as or smaller than the outer diameter of the non-connection end portion.

An annular flange fixing groove 7 is further formed on the outer circumferential surface of the resin pipe 2 of this embodiment, and a metal flange 9 is externally fitted to the flange fixing groove 7. The annular grooves 6 are disposed further on the tip side than the metal flange 9 in the pipe axial direction. The metal flange 9 is a part for fixing the resin pipe 2 to the connection object 11.

The metal flange 9 includes an insert hole 9a penetrating in the pipe axial direction, and a mounting hole 9b. The flange fixing groove 7 fits into the insert hole 9a with the resin pipe 2 penetrating. The metal flange 9 is not required and can be provided if necessary. If the specification does not have the metal flange 9, the flange fixing groove 7 is not formed on the outer circumferential surface of the resin pipe 2.

As illustrated in FIG. 3, the frontmost annular groove 6a has a groove width B1 and a groove depth D1, and the other annular groove 6b has a groove width B2 and a groove depth D2. The groove widths B1 and B2 of both grooves are the same, but the groove depth D1 is larger than the groove depth D2 (D1 > D2). The sealants 8a and 8b have the same specification, so that thicknesses W1 and W2 in the pipe radial direction of the sealants 8a and 8b respectively disposed in the annular grooves 6a and 6b in the cross-section are the same. The sealants 8a and 8b are respectively externally fitted over the annular grooves 6a and 6b, so that the thicknesses W1 and W2 in the pipe radial direction of the sealants change very slightly but can be regarded as the same. Thus, a projection amount P1 (= W1 - D1) in the pipe radial direction of the one sealant 8a from the outer circumferential surface of the connection end portion 5 is set smaller than a projection amount P2 (= W2 - D2) in the pipe radial direction of the other sealant 8b from the outer circumferential surface of the connection end portion 5 (P1 < P2). The difference between the projection amount P1 and the projection amount P2 is, for example, 0.05 mm or more and 1.80 mm or less.

As illustrated in FIG. 4, the resin pipe 2 is connected and fixed to the connection object 11. To connect and fix the resin pipe 2 to the connection object 11, the connection end portion 5 is inserted into the connection hole 11a of the connection object 11, and one end surface of the metal flange 9 is brought into contact with the opposing surface of the connection object 11. In the range in which the connection end portion 5 is inserted into the connection hole 11a, the inner diameter of the connection hole 11a is set to a substantially constant value in the pipe axial direction. Then, a fixing bolt 10 penetrating the mounting hole 9b of the metal flange 9 is screwed into the bolt hole formed in the connection object 11, thereby completing the connection and fixing operation.

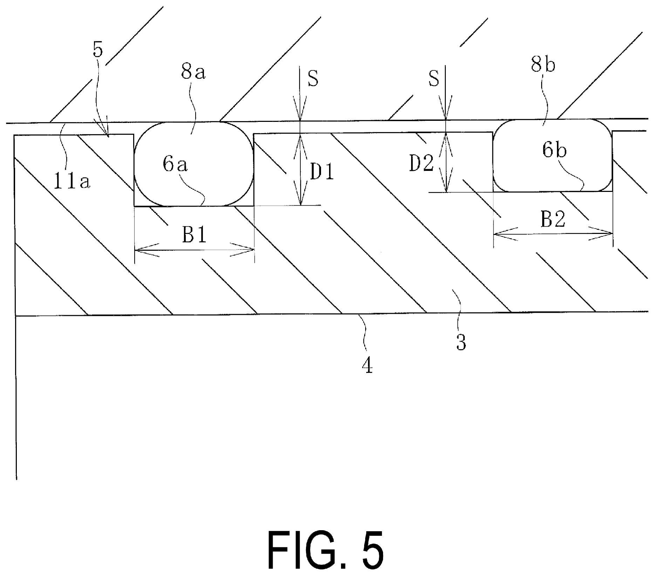

In the connection structure in which the resin pipe 2 is connected and fixed to the connection object 11, the sealant 8 provided on the outer circumferential surface of the connection end portion 5 is brought into contact with the inner circumferential surface of the connection hole 11a, thereby ensuring the sealing properties between the resin pipe 2 (connection end portion 5) and the connection hole 11a. More specifically, as illustrated in FIG. 5, the connection end portion 5 inserted into the connection hole 11a is pressed toward the axial center CL together with the sealants 8a and 8b. The sealants 8a and 8b are compressed and deformed by the inner circumferential surface of the connection hole 11a, then block and seal the space S between the outer circumferential surface of the connection end portion 5 and the inner circumferential surface of the connection hole 11a.

The space S between the inner circumferential surface of the connection hole 11a and the outer circumferential surface of the connection end portion 5 is substantially constant, and the space S is, for example, 0.065 mm or less. This space S is calculated by (Inner diameter of the connection hole 11a - Outer diameter of the connection end portion 5) / 2. The inner diameter of the connection hole 11a can be known in advance, so that the space S can also be known in advance.

According to the resin pipe with sealant 1, the other sealant 8b is pressed by the inner circumferential surface of the connection hole 11a more strongly (larger in the pipe radial direction) than the one sealant 8a. In the step of inserting the connection end portion 5 into the connection hole 11a, the projection amount P1 of the sealant 8a disposed in the frontmost annular groove 6a is set smaller than the projection amount P2 of the other sealant 8b, so that the connection end portion 5 is more easily inserted into the connection hole 11a than when the projection amounts P1 and P2 of the sealants 8a and 8b are the same. Accordingly, damage to the sealant 8a is advantageously prevented in the step of inserting the connection end portion 5 into the connection hole 11a.

In the resin pipe with sealant 1, after the connection end portion 5 is inserted into the connection hole 11a, the sealant 8a having a relatively small projection amount P1 is less likely to be excessively compressed, so that the compression load over time is reduced and the sealing properties are easily ensured over a long term. The sealant 8a is not excessively compressed, thereby also advantageously suppressing the deformation of the resin forming the vicinity of the frontmost annular groove 6a in which the sealant 8a is disposed and thus ensuring the sealing properties over a long term.

The other sealant 8b is pressed more strongly between the outer circumferential surface of the connection end portion 5 and the inner circumferential surface of the connection hole 11a than the one sealant 8a, so that the other sealant 8b bears more various external forces acting on the resin pipe 2 than the sealant 8a. Accordingly, it is advantageous for the one sealant 8a to seal the fluid entering between the outer circumferential surface of the connection end portion 5 and the inner circumferential surface of the connection hole 11a over a long term under a more favorable installation condition than for the other sealant 8b.

The resin pipe with sealant 1 performs a function such that the sealant 8a disposed in the frontmost annular groove 6a first seals the fluid entering between the outer circumferential surface of the connection end portion 5 and the

inner circumferential surface of the connection hole 11a. The other sealant 8b functions as a backup of the sealant 8a and also functions to block the entry of outside air and outside moisture into the pipe passage 4 or the connection hole 11a.

In general, the one sealant 8a, which seals fluid entering between the outer circumferential surface of the connection end portion 5 and the inner circumferential surface of the connection hole 11a, is placed under a more severe use environment than the other sealant 8b. Then, this resin pipe with sealant 1 is configured such that the sealant 8a, which is placed under a more severe use environment, is specialized in sealing fluid flowing through the pipe passage 4 and the connection hole 11a under a more favorable installation condition as described above. This resin pipe with sealant 1 allows to stably ensure good sealing properties over a long term by not providing the sealants 8a and 8b with simple dual sealing functions, but with different appropriate functions corresponding to the arrangement positions.

This resin pipe with sealant 1 more advantageously reduces weight than a metal pipe. As in this embodiment, providing the sealants 8a and 8b having the same specification and using the common sealant 8 can advantageously reduce the procurement cost and the management cost of the sealant 8.

In this embodiment, a squeeze ratio E of the sealant 8 calculated by the following Formula (1) is set larger for the sealant 8b disposed in the annular groove 6b disposed farther from the pipe end side than the sealant 8a disposed in the frontmost annular groove 6a, for the sealant 8a disposed in the frontmost annular groove 6a.

Squeeze ratio E of sealant 8 = {(Projection amount P of the sealant 8 in the pipe radial direction from the outer circumferential surface of the connection end portion 5 - Space S between the inner circumferential surface of the connection hole 11a and the outer circumferential surface of the connection end portion 5) / Thickness W of the sealant 8 in the pipe radial direction} $\times$ 100 (%) (1)

Preferably, the squeeze ratio E of the one sealant 8a is set to 10% or more and 30% or less, and the squeeze ratio E of the other sealant 8b is set to 20% or more and 40% or less. If the squeeze ratio E is less than 10%, there is a risk that the sealing properties between the outer circumferential surface of the connection end portion 5 and the inner circumferential surface of the connection hole 11a cannot be sufficiently ensured. If the squeeze ratio E is greater than 40%, there is a risk that the sealant 8 is excessively compressed and the service life thereof is shortened.

If the squeeze ratios E of the sealants 8a and 8b are set as described above, each of the sealants 8a and 8b can be kept in a compressed state in which sufficient sealing properties can be ensured for a long term, and various external forces can be borne more to the sealant 8b than to the sealant 8a. The space S can be grasped in advance, and thus a projection amount P can be adjusted so that the squeeze ratio E becomes a desired value based on the grasped space S in advance.

Furthermore, in this embodiment, the space filling ratio n of the sealant 8 calculated by the following Formula (2) is set larger for the sealant 8b disposed in the annular groove 6b disposed farther from the pipe end side than the sealant 8a disposed in the frontmost annular groove 6a, for the sealant 8a disposed in the frontmost annular groove 6a.

Space filling ratio n of sealant 8 = {Cross-sectional area of the sealant 8 / (Groove width B of the annular groove 6 in which the sealant 8 is disposed $\times$ (Groove depth D of the annular groove 6 + Space S between the inner circumferential surface of the connection hole 11a and the outer circumferential surface of the connection end portion 5))} $\times$ 100 (%) (2)

Here, the cross-sectional area of the sealant 8 is, in this embodiment, $(\pi/4) \times$ (Thickness W1 in the pipe radial direction of the sealant 8a)$^2$ for the sealant 8a, and $(\pi/4) \times$ (Thickness W2 in the pipe radial direction of the sealant 8b)$^2$ for the sealant 8b.

Preferably, the space filling ratio n of the one sealant 8a is set to 85% or less, and the space filling ratio n of the other sealant 8b is set to 98% or less. If the space filling ratio n of the one sealant 8a is more than 85%, the restriction on the movement of the sealant 8a in the annular groove 6a is too strong, and the load on the sealant 8a becomes excessive. This becomes disadvantageous in maintaining the sealing properties for a long term. The lower limit of the space filling ratio n of the sealant 8a is, for example, 70% or 75%. If the space filling ratio n of the other sealant 8b is more than 98%, the shape of the sealant 8 is substantially fixed in the annular groove 6b, so that there is a risk that the shape of the sealant 8 is substantially fixed and its flexibility is reduced early. This becomes disadvantageous in maintaining the sealing properties for a long term. The lower limit of the space filling ratio n of the sealant 8b is, for example, 80% or 85%.

Setting the space filling ratios of the sealants 8a and 8b as described above, can keep the sealants 8a and 8b in a state to ensure sufficient sealing properties for a long term, and to burden various external forces on the sealant 8b more than the sealant 8a. The space S can be grasped in advance, so that the specifications of the sealants 8 and the annular grooves 6 can be adjusted so that the space filling ratio n becomes a desired value based on the grasped space S in advance.

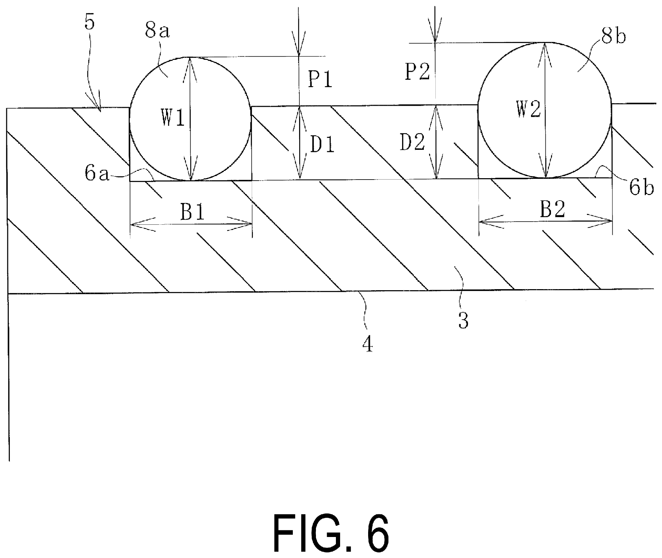

In another embodiment of the resin pipe 1 with sealant illustrated in FIG. 6, in order to make the projection amount P1 of the one sealant 8a smaller than the projection amount P2 of the other sealant 8b, the thickness W2 in the pipe radial

direction of the sealant 8b is made larger than the thickness W1 in the pipe radial direction of the sealant 8a. The cross sections of the sealants 8a and 8b are each simply circular.

The groove depths D1 and D2 of the annular grooves 6a and 6b are the same, but the groove width B2 is larger than the groove width B1 (B2 > B1). In this embodiment, by adjusting the thicknesses W1 and W2 in the pipe radial direction of the sealants 8a and 8b, respectively, the squeeze ratios E of the sealants 8a and 8b can be set to the above appropriate range.

In this embodiment, the groove width B2 is increased as the pipe radial thickness W2 of the sealant 8b is increased. If W2 is increased without increasing the groove width B2, the space filling ratio n of the sealant 8b becomes excessive. Thus, in this embodiment, by adjusting the groove width B2 while making the groove depths D1 and D2 the same, it is easy to set the space filling ratios n of the sealants 8a and 8b within the above appropriate ranges.

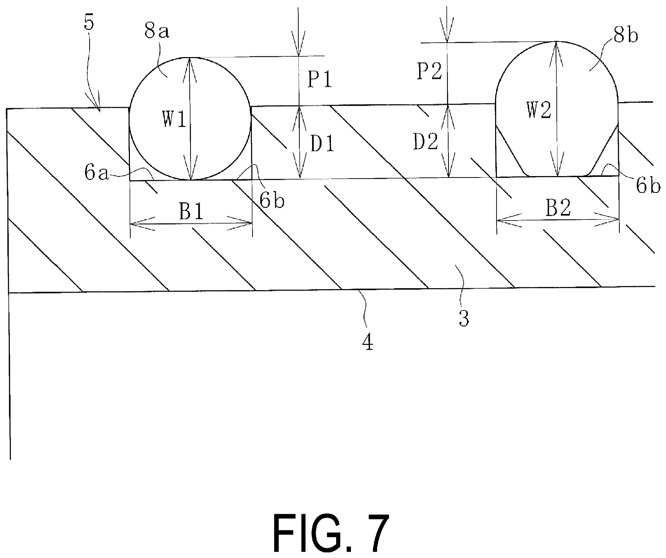

In another embodiment of the resin pipe with sealant 1 illustrated in FIG. 7, in order to make the projection amount P1 of the one sealant 8a smaller than the projection amount P2 of the other sealant 8b, the pipe radial thickness W2 of the other sealant 8b is made larger than the pipe radial thickness W1 of the one sealant 8a. However, the cross-section of the one sealant 8a is a simple circular shape, while the cross-section of the other sealant 8b is a non-circular shape.

The groove depths D1 and D2 of the annular grooves 6a and 6b are the same, and the groove widths B1 and B2 are also the same. In this embodiment, by adjusting the thicknesses W1 and W2 in the pipe radial direction of the sealants 8a and 8b, respectively, the squeeze ratios E of the sealants 8a and 8b can be set to the above appropriate range.

In this embodiment, along with the increase of the pipe radial thickness W2 of the other sealant 8b, the cross-section of the sealant 8b is made to be a non-circular shape to reduce the cross-sectional area accordingly. If W2 is increased without reducing the cross-sectional area of the sealant 8b accordingly, the space filling ratio n of the sealant 8b becomes excessive. Thus, in this embodiment, by adjusting the cross-sectional area of the sealant 8b, while keeping the groove depths D1 and D2 the same and the groove widths B1 and B2 the same, it is easy to set the space filling ratios n of the sealants 8a and 8b to the appropriate ranges described above.

The embodiments described above dispose two sealants 8 on the outer circumferential surface of the connection end portion 5 at intervals in the pipe axial direction, but can dispose three or more sealants 8 at intervals in the pipe axial direction. In consideration of cost and maintenance, preferably two sealants 8 are disposed at intervals in the pipe axial direction.

Reference Signs List

- 1 Resin pipe with sealant
- 2 Resin pipe
- 3 Pipe wall
- 4 Pipe passage
- 5 Connection end portion
- 6 (6a, 6b) Annular groove
- 7 Flange fixing groove
- 8 (8a, 8b) Sealant
- 9 Metal flange
- 9a Insert hole
- 9b Mounting hole
- 10 Fixing bolt
- 11 Connection object
- 11a Connection hole (Flow path)
- S Space

## Claims

**1.** A resin pipe with sealant, comprising:

a resin pipe comprising a connection end portion to be inserted into a connection hole formed in a connection object; and
sealants having an annular shape respectively disposed in a plurality of annular grooves formed at intervals in the pipe axial direction on an outer circumferential surface of the connection end portion of the resin pipe;
of the plurality of annular grooves, a projection amount, from the outer circumferential surface of the connection

end portion in a pipe radial direction, of a sealant of the sealants disposed in a frontmost annular groove positioned closest to the pipe end of the connection end portion being set smaller than the projection amounts, from the outer circumferential surface of the connection end portion in the pipe radial direction, of the other sealants disposed in the other annular grooves positioned farther from the pipe end side than the frontmost annular groove.

**2.** The resin pipe with sealant according to claim 1, wherein

the sealants have the same specification, and
a groove depth of the frontmost annular groove is set larger than a groove depth of each of the other annular grooves disposed farther from the pipe end side than the frontmost annular groove.

**3.** The resin pipe with sealant according to claim 1 or 2, wherein a squeeze ratio E of the sealants calculated by Formula (1) is set such that the squeeze ratio E of the other sealants disposed in the other annular grooves located farther from the pipe end side is larger than that of the sealant disposed in the frontmost annular groove, that the squeeze ratio E of the sealant disposed in the frontmost annular groove is 10% or more and 30% or less, and that the squeeze ratio E of the other sealants disposed in the other annular grooves is 20% or more and 40% or less:

Squeeze ratio E of sealant = {(Projection amount P of the sealant in the pipe radial direction from the outer circumferential surface of the connection end portion - Space S between the inner circumferential surface of the connection hole and the outer circumferential surface of the connection end portion) / Thickness W of the sealant in the pipe radial direction} × 100 (%) (1)

**4.** The resin pipe with sealant according to any one of claims 1 to 3,
wherein
a space filling ratio n of the sealant calculated by Formula (2) is set such that the space filling ratio n of the other sealants disposed in the other annular grooves located farther from the pipe end side is larger than that of the sealant disposed in the frontmost annular groove, that the space filling ratio n of the sealant disposed in the frontmost annular groove is 85% or less, and that the space filling ratio n of the other sealants disposed in the other annular grooves is 98% or less:

Space filling ratio n of sealant = {Cross-sectional area of the sealant / (Groove width B of the annular groove in which the sealant is disposed × (Groove depth D of the annular groove + Space S between the inner circumferential surface of the connection hole and the outer circumferential surface of the connection end portion))} × 100 (%) (2)

**5.** The resin pipe with sealant according to any one of claims 1 to 4, wherein the number of the plurality of annular grooves is two.

9
1
5
8a
8b
9b
2
9a
A
CL
4
3
6a
6b
7

FIG. 1

1
9
9b
9a
4
3
5(2)
8b
8a

FIG. 2

5
8a
8b
S
P1
P2
W1
W2
D1
D2
6a
6b
11a
B1
B2
3
4

FIG. 3

11
9
10
1
2
9b
9a
S
8a
8b
CL
11a
6a
6b
4
3
7
5

FIG. 4

5
8a
S
S
8b
11a
6a
D1
D2
6b
B1
B2
3
4

FIG. 5

5
8a
P1
P2
8b
W1
W2
D1
D2
6a
6b
B1
B2
3
4

FIG. 6

5
8a
P1
P2
8b
W1
D1
D2
W2
6a
6b
6b
B1
B2
3
4

FIG. 7

**INTERNATIONAL SEARCH REPORT**

International application No.
**PCT/JP2024/022826**

**A. CLASSIFICATION OF SUBJECT MATTER**

***F16L 47/06***(2006.01)i; ***F16J 15/10***(2006.01)i; ***F16L 21/035***(2006.01)i
FI: F16L47/06; F16L21/035; F16J15/10 C; F16J15/10 L

According to International Patent Classification (IPC) or to both national classification and IPC

**B. FIELDS SEARCHED**

Minimum documentation searched (classification system followed by classification symbols)

F16L47/06; F16J15/10; F16L21/035

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2013-83316 A (SANDEN CORP.) 09 May 2013 (2013-05-09) paragraphs [0012]-[0037], fig. 4, 5 | 1-5 |
| Y | JP 2011-132981 A (KITZ CORPORATION) 07 July 2011 (2011-07-07) paragraphs [0022]-[0026], fig. 1, 2 | 1-5 |
| Y | JP 2001-4251 A (DENSO CORPORATION) 12 January 2001 (2001-01-12) paragraphs [0063]-[0064], fig. 10 | 2-5 |
| Y | JP 2013-238293 A (MITSUBISHI ELECTRIC CORPORATION) 28 November 2013 (2013-11-28) paragraph [0012] | 3-5 |
| Y | JP 2008-519223 A (VOSS AUTOMOTIVE GMBH) 05 June 2008 (2008-06-05) paragraphs [0029]-[0031] | 4-5 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 August 2024** | **27 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/022826**

| Patent document cited in search report | Publication date (day/month/year) | Patent family member(s) | Publication date (day/month/year) |
|---|---|---|---|
| JP 2013-83316 A | 09 May 2013 | WO 2013-054815 A1 | |
| JP 2011-132981 A | 07 July 2011 | (Family: none) | |
| JP 2001-4251 A | 12 January 2001 | US 6443502 B1<br>column 8, lines 36-53, fig. 9<br>EP 1052443 A2 | |
| JP 2013-238293 A | 28 November 2013 | (Family: none) | |
| JP 2008-519223 A | 05 June 2008 | WO 2006/051071 A1<br>DE 202004017316 U1<br>CN 101099062 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010249166 A